# EUROPÄISCHE PATENTSCHRIFT

(11) **EP 0 470 527 B1**
(45) Veröffentlichungstag und Bekanntmachung des Hinweises auf die Patenterteilung: **19.01.1994**
(21) Anmeldenummer: 91113065.6
(22) Anmeldetag: 02.08.1991
(51) Int. Cl.: B62D 17/00

(54) **Schwinghebel-Radlagerung für Fahrzeugachsen**
Oscillating arm wheel bearing for axles of vehicles
Roulement de roue à levier oscillant pour essieux de véhicules

(30) Priorität: 07.08.1990 DE 9011495 U
(43) Veröffentlichungstag der Anmeldung: 12.02.1992
(73) Patentinhaber: AL-KO KOBER AG, D-89359 Kötz (DE)
(72) Erfinder: Wöhrle, Rudolf, W-8873 Ichenhausen/Rieden (DE); Werdich, Anton, W-8878 Bibertal OT Anhofen (DE); Stachler, Siegfried, W-8877 Burtenbach (DE)
(74) Vertreter: Ernicke, Hans-Dieter, Dipl.-Ing.

(56) Entgegenhaltungen:
- US-A- 4 641 853
- US-A- 4 836 574
- US-A- 4 921 271

## Beschreibung

Die Erfindung befaßt sich mit einer Schwinghebel-Lagerung bei Fahrzeugachsen, insbesondere bei Torsionsfederachsen von Fahrzeuganhängern, mit den im Oberbegriff des Hauptanspruches angegebenen Merkmalen. Diese Merkmale sind dem Fachwissen des Durchschittsfachmannes zuzurechnen.

Das Problem der Erfindung wird am Beispiel eines Fahrzeuganhängers nach Art eines Wohnwagens dargestellt, ohne daß die Erfindung darauf beschränkt ist. Solche Fahrzeuganhänger erfordern eine, dem schnellen Straßenverkehr angepaßte technische Gestaltung des Fahrwerkes, wozu im besonderen die richtige Einstellung der Vorspur der einzelnen Räder gehört.

Bei den im Verkehr üblicherweise verwendeten Fahrzeugen sind die einzelnen Räder an Radschwinghebeln über Radlagerbolzen drehbar gelagert. Diese Radschwinghebel sitzen auf den Achsstummeln der Fahrzeugachse, welche beim Beispiel der Erfindung bevorzugt als Torsionsfederachse unter Verwendung von strangförmigen Torsionselementen aus Gummi ausgebildet sind.

Diese Radschwinghebel bestehen aus Schweißkonstruktionen, bei deren Herstellung die Schräglage des Radlagerbolzens gegenüber der Torsionsfederachse bereits berücksichtigt ist. Das für die Aufnahme des Radlagerbolzens bestimmte Auge des Radschwinghebels weist demnach eine andere Richtung als das Auge des Radschwinghebels auf, mit welchem dieser auf der Torsionsfederachse befestigt ist. Daraus folgt, daß für das rechte und für das linke Rad eines Fahrzeuges jeweils eine besondere Gestaltung des Radschwinghebels erforderlich ist. Eine Veränderung der Vorspur ist bei solchen vorgefertigten Radschwinghebeln nicht möglich. Obendrein ist die Toleranz zu berücksichtigen, die beim Schweißen der Radschwinghebel unvermeidlich ist. In der Praxis hat sich häufig gezeigt, daß Schweißverzug einen erheblichen negativen Einfluß auf die vorgegebenen Vorspur ausübt.

Der Erfindung liegt daher das technische Problem zugrunde, eine Schwinghebel-Radlagerung zu entwickeln, bei welcher der Schweißverzug keinen nachteiligen Einfluß auf die Einstellung der Vorspur ausübt und obendrein eine einzige Grundkonstruktion des Radschwinghebels genügt, um diesen für die Montage des linken oder rechten Rades einzusetzen sowie Nachstellungen der Vorspur zuzulassen.

Dieses technische Problem wird mit den im Kennzeichnungsteil des Hauptanspruches aufgeführten Merkmalen gelöst.

Im Prinzip geht es bei der Erfindung darum, eine Grundkonstruktion des Radschwinghebels zu finden, die ihn zur Lagerung des linken wie auch des rechten Fahrzeugrades geeignet macht. In einem solchen Radschwinghebel muß die Einstellung der Vorspur durch entsprechende Lagerung des Radlagerbolzens ermöglicht werden, was den Vorteil mit sich bringt, daß die eingestellte Vorspur sich korrigieren bzw. verändern läßt.

Am einfachsten wird dieses technische Problem durch die Merkmale des Anspruchs 1 gelöst, und insbesondere, daß der Radlagerbolzen zueinander abgeknickte Lagerschäfte besitzt, welche einerseits zur Führung im Radschwinghebel und andererseits zur Lagerung des Rades erforderlich sind.

Eine solche Abknickung des Radlagerbolzens gemäß Anspruch 1 läßt sich auf verschiedene Weise herstellen. Im einen bevorzugten Fall wird der Lagerbolzen drehtechnisch bearbeitet, wobei der Knickwinkel berücksichtigt wird. In einem anderen bevorzugten Ausführungsbeispiel wird der Radlagerbolzen aus zwei vorgefertigten Drehteilen im Reibschweißverfahren zusammengesetzt, wobei die Reibschweißtechnik die Ausbildung von schrägen Reibflächen voraussetzt, welche den Knickwinkel der beiden Lagerschäfte bestimmt.

Im Rahmen von Ausgestaltungen der Erfindung ist vorgesehen, daß der Knickwinkel zwischen den Lagerschäften der Größe der vorgegebenen Vorspur entspricht. Als zweckmäßig hat sich erwiesen, wenn der Scheitel der geknickten Achsen an der Anlagefläche des Bundes am Auge des Schwinghebels liegt.

Damit die vorgegebene Vorspur des einzelnen Rades einstellbar oder veränderbar ist, sieht die Erfindung vor, daß der erste Lagerschaft im Auge des Schwinghebels um seine Achse verdrehbar geführt, aber im festgespannten Zustand gegen Verdrehung fixiert ist. Eine solche Ausgestaltung ermöglicht es, ein durch Unfall oder dgl. verstelltes Rad wieder in die richtige Vorspur-Lage zu bringen, ohne daß Bauteile ersetzt werden müssen, sofern die vorhandenen Bauteile keine schädlichen Verformungen erlitten haben.

Die Erfindung ermöglicht es, den Radschwinghebel in vereinfachter Ausführung zu bilden, indem man ihn gemäß Ansprüchen 5 und folgenden aus zwei tiefgeprägten Halbschalen aus Stahlblech bildet, die miteinander längs ihrer Ränder verschweißt sind und einen Hohlraum umschließen. Solche Hohlkörper-Radschwinghebel weisen eine besonders große Steifigkeit bei minimaler Wandstärke der Halbschalen auf, weshalb solche Radschwinghebel mit Vorteil auch bei anderen Achsgestaltungen von Fahrzeugen eingesetzt werden. Die Erfindung beschränkt sich daher nicht auf die offenbarten Ausführungsbeispiele.

Die erfindungsgemäße Konstruktion der Lagerung und Befestigung des Radlagerbolzens im Radschwinghebel bringt weitere, davon abhängige Vorteile mit sich, welche beispielsweise im Anspruch 8 definiert sind. Danach ist es möglich, auf dem Radlagerbolzen weitere Bauteile zu führen, z.B. einen Bremsträgerschild, der gegen Verdrehung gesperrt werden muß. Zu diesem Zweck empfiehlt es sich, die Stirnseite der Nabe mit einer radialen Verzahnung zu versehen, damit dort der Bremsträgerschild gegen Verdrehung gesichert werden kann.

Schließlich sieht die Erfindung im Rahmen des Anspruches 10 vor, daß man die Lage des Radlagerbolzens im Radschwinghebel kenntlich machen kann. Dies ermöglicht der Werkstatt im Falle eines Unfalles oder sonstigen Schadens zu erkennen, ob und welche Nachstellung der Vorspur notwendig ist.

Einzelheiten der Erfindung ergeben sich aus der Zeichnung. Hier ist die Erfindung schematisch und beispielsweise dargestellt. Es zeigen:
- Fig. 1:: eine Vorderansicht einer Schwinghebel-Radlagerung,
- Fig. 2:: einen Vertikalschnitt längs der Linie II - II durch die Radlagerung gemäß Fig. 1 und
- Fig. 3:: eine Stirnansicht des Radschwinghebels entsprechend dem Pfeil A in Fig. 2.

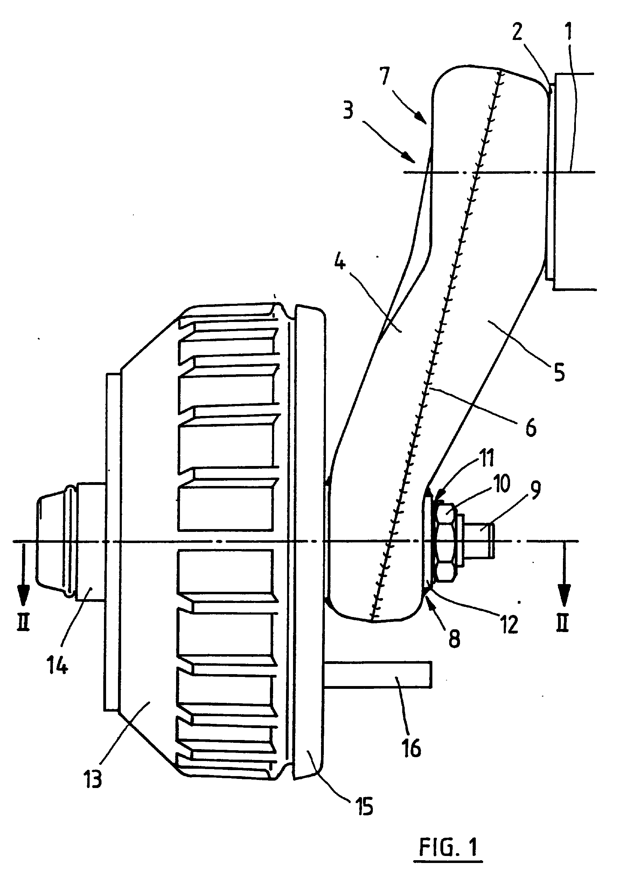

Im Ausführungsbeispiel der Fig. 1 ist ein mit einer Radtrommel (13) beschickter Radschwinghebel (3) in Stirnansicht gezeigt, der mit seinem Auge (7) auf einem Achsstummel (2) einer Torsionsfederachse (1) sitzt. Diese Torsionsfederachse (1) kann beispielsweise eine Gummifederachse für Fahrzeuganhänger, insbesondere Wohnwagen, sein, ohne daß darauf die Erfindung beschränkt ist.

Der Radschwinghebel (3) besteht aus zwei Halbschalen (4,5), welche tiefgeprägt sind und mit ihrem Rand (6) miteinander verschweißt sind. Dadurch umschließen die beiden Halbschalen (4,5) einen Hohlraum und bilden trotz geringer Wandstärke einen biegesteifen Hebel. Die Verschweißung kann ohne Schweißverzug vorgenommen werden.

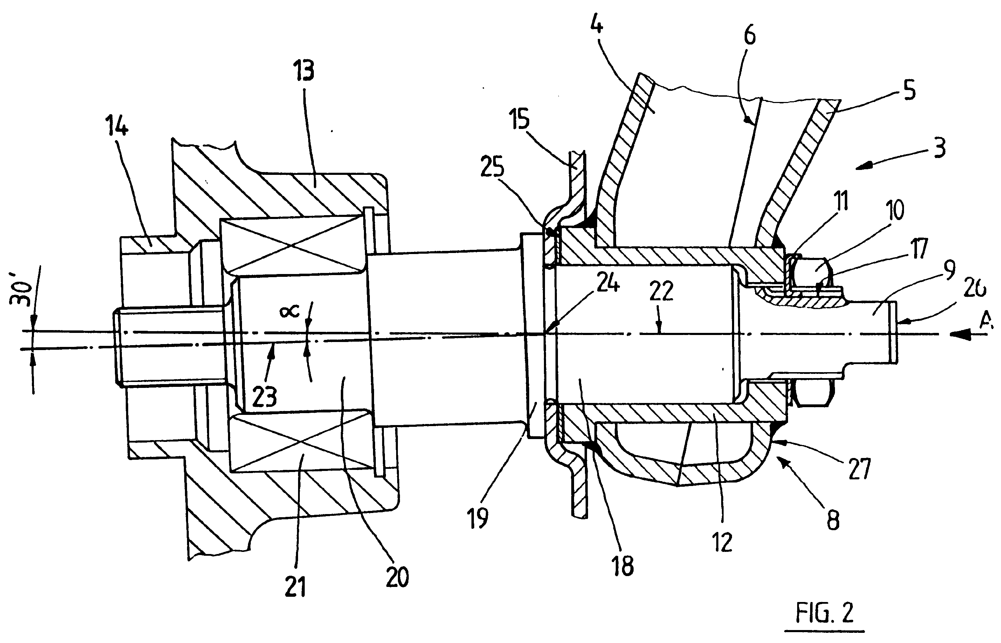

Am unteren Auge (8) des Radschwinghebels (3) ist ein Radlagerbolzen (9) schraubtechnisch befestigt, der in Fig. 2 vergrößert dargestellt ist.

In den Halbschalen (4,5) befinden sich im Bereich der Augen (7,8) entsprechende Ausstanzungen, durch welche vorgefertigte Naben (12) hindurchgeführt und außenseitig mit den Halbschalen (4,5) verschweißt werden.

Wie speziell Fig. 2 deutlicher zeigt, weist der Radlagerbolzen (9) hinsichtlich seiner Längsachse einen Knick auf, der mit 24 bezeichnet ist. Dieser Knick bedingt, daß der erste Lagerschaft (18), der zur Führung des Radlagerbolzens (9) im Auge (8) des Radschwinghebels (3) benötigt wird, hinsichtlich seiner Längsachse (22) von dem zweiten Lagerschaft (20) unterscheidet, auf dem das Radlager (21) für die Radtrommel (13) befestigt ist. Die Längsachsen (22,23) beider Lagerschäfte (18,20) schließen den Winkel alpha ein, der beim Ausführungsbeispiel 30' beträgt. Dieser Winkel alpha entspricht der theoretisch vorgegebenen Vorspur, welche die beiden Räder für eine optimale Fahrweise des Fahrzeuges bzw. Anhängers besitzen sollen.

Im Ausführungsbeispiel der Fig. 2 ist der Scheitel (24) dieser beiden Achsen (22,23) an der dem Radschwinghebel (3) zugekehrten Anlagefläche eines Bundes (19) des Radlagerbolzens (9) vorgesehen. Dieser Scheitel (24) kann aber auch in Richtung zum zweiten Lagerschaft (20) versetzt sein.

Die Fig. 2 zeigt, wie das Auge (8) des Radschwinghebels (3) von der Nabe (12) durchsetzt ist, welche mit den Außenseiten der Halbschalen (4,5) verschweißt ist. Die Achse dieser Nabe (12) bzw. des darin geführten Lagerschaftes (18) liegt parallel zur Torsionsfederachse (1) (vgl. Fig. 1). Durch die Verschraubung (10) wird der Bund (19) des Radlagerbolzens (9) gegen die Stirnseite der Nabe (12) verspannt.

Durch eine Verdrehung des Radlagerbolzens (9) um die Achse der Nabe (12) kann der zweite Lagerschaft (20) und damit das gesamte Rad räumlich innerhalb des Winkels alpha verstellt werden. Dies führt zunächst einmal dazu, daß ein und derselbe Radschwinghebel mitsamt dem Radlagerbolzen (9) für beide Räder einer Fahrzeugachse (1) verwendet werden können, weil für diesen Zweck die Radlagerbolzen (9) nur um 180' zueinander verdreht sein müssen. Es ist aber auch möglich, durch diese Drehverstellung des Radlagerbolzens (9) auch Korrekturen hinsichtlich der Größe der Vorspur oder zur Beseitigung von Beschädigungen vorzunehmen.

Zu diesem Zweck ist der erste Lagerschaft (18) in der Nabe (12) drehbar geführt. In der festgeschraubten Stellung ist jedoch der Radlagerbolzen (9) gegen Verdrehung gesichert. Beim Ausführungsbeispiel wird dies durch eine Fixierung (11) zwischen der Stirnseite der Nabe (12) und der Verschraubung (10) vorgenommen, welche mit passenden Teilen in eine Längsnut (17) des Radlagerbolzens (9) eingreift. Es ist damit ein doppelter Reibschluß an beiden Stirnseiten der Nabe (12) gegeben, dessen eine, die Reibung bedingende Fixierung (11) zusätzlich drehschlüssig festgelegt ist.

Das Ausführungsbeispiel der Fig. 2 zeigt fernerhin, daß die dem Rad zugekehrte Stirnseite der Nabe (12) mit einer Radialverzahnung (25) versehen ist, in welche eine passende Gegenverzahnung eines Bremsträgerschildes (15) eingreift, das zwischen dem Bund (19) und der Nabe (12) angeordnet und auf dem Lagerschaft (18) geführt ist. Wie Fig. 1 zeigt, befindet sich an diesem Bremsträgerschild (15) eine Führung (16) zur Aufnahme und zum Anschluß der Bremsbetätigungsmittel, z.B. Bowdenzug.

Die Radtrommel (13) ist in üblicherweise mit Hilfe der Verschraubung (14) am Radlagerbolzen (9) gegen Längsverschiebung gesichert.

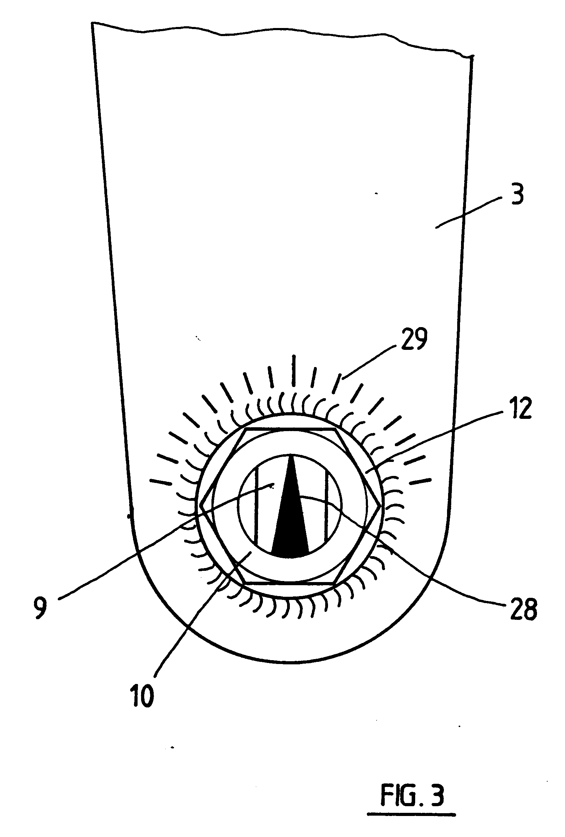

Im Ausführungsbeispiel der Fig. 3 ist gezeigt, wie man von außen her die Winkellage des zweiten Lagerschaftes (20) gegenüber dem ersten Lagerschaft (18) erkennen kann. Zu diesem Zweck ist beim Ausführungsbeispiel an der Stirnfläche (26) des Radlagerbolzens (9) eine Pfeilmarkierung (28) angebracht, die mit einer Skalamarkierung (29) verglichen werden kann, die an einer benachbarten Fläche der Nabe (12) oder des Auges (8) des Radschwinghebels (3) angebracht wird. Die vorher festgelegte Teilung der Skalamarkierung (29) gibt genaue Auskunft darüber, nach welcher Richtung die Vorspur eingestellt ist und welche Größe die Vorspur besitzt. Anhand dieses Markierungsvergleiches kann man auch ermessen, ob sich durch eine Beschädigung die Vorspur verändert hat.

### STÜCKLISTE

- 1: Torsionsfederachse
- 2: Achsstummel
- 3: Radschwinghebel
- 4: Halbschale
- 5: Halbschale
- 6: Rand
- 7: Auge
- 8: Auge
- 9: Radlagerbolzen
- 10: Verschraubung
- 11: Fixierung
- 12: Nabe
- 13: Radtrommel
- 14: Verschraubung
- 15: Bremsträgerschild
- 16: Führung für Bremsbetätigung
- 17: Längsnut
- 18: erster Lagerschaft
- 19: Bund
- 20: zweiter Lagerschaft
- 21: Radlager
- 22: Achse des ersten Lagerschaftes
- 23: Achse des zweiten Lagerschaftes
- 24: Scheitel
- 25: radiale Verzahnung
- 26: Stirnfläche des Radlagerbolzens
- 27: Stirnfläche der Nabe oder/und des Auges
- 28: Pfeilmarkierung
- 29: Skalamarkierung

## Patentansprüche

1. Schwinghebel-Radlagerung bei Fahrzeugachsen, insbesondere bei Torsionsfederachsen von Fahrzeuganhängern, bei der das eine Auge (7) des Schwinghebels (3) auf einem Achsstummel (2) der Fahrzeugachse (1) sitzt und das andere Auge (8) einen Radlagerbolzen (9) trägt, der mit einem ersten Lagerschaft (18) im Auge (8) geführt und über einen Bund (19) mittels Verschraubung (10) axial festgespannt ist und der mit einem zweiten Lagerschaft (20) das Radlager (21) trägt, dadurch **gekennzeichnet,** daß die Achsen (22,23) der beiden Lagerschäfte (18,20) miteinander einen spitzen Winkel (alpha) bilden, dessen Scheitel (24) im Bereich zwischen dem Bund (19) und dem zweiten Lagerschaft (20) für das Radlager liegt.

2. Radlagerung nach Anspruch 1, dadurch **gekennzeichnet,** daß der spitze Winkel (alpha) die Größe der vorgegebenen Vorspur besitzt.

3. Radlagerung nach Anspruch 1, dadurch **gekennzeichnet,** daß der Scheitel (24) des spitzen Winkels (alpha) an der Anlagefläche des Bundes (19) am Auge (8) des Schwinghebels (3) liegt.

4. Radlagerung nach Anspruch 1 oder einem der folgenden, dadurch **gekennzeichnet,** daß der erste Lagerschaft (18) im Auge (8) des Schwinghebels um seine Achse (22) verdrehbar geführt, aber im festgespannten Zustand gegen Verdrehung fixiert (11) ist.

5. Radlagerung insbesondere nach Anspruch 1 oder einem der folgenden, dadurch **gekennzeichnet,** daß der Radschwinghebel (3) aus zwei tiefgeprägten Halbschalen (4,5) aus Stahlblech besteht, die miteinander längs ihrer Ränder (6) verschweißt sind und einen Hohlraum umschließen.

6. Radlagerung nach Anspruch 5, dadurch **gekennzeichnet,** daß die Halbschalen (4,5) im Bereich der zu bildenden Augen (7,8) ausgestanzt sind und daß Naben (12) in die Ausstanzungen eingesetzt und außenseitig mit den Halbschalen (4,5) verschweißt sind.

7. Radlagerung nach Anspruch 6, dadurch **gekennzeichnet,** daß der Radlagerbolzen (9) im Bereich seiner Verschraubung (10) mit dem Schwinghebel (3) mindestens eine Längsnut (17) zum Eingriff eines Mittels der Drehfixierung (11) der Verschraubung (10) aufweist.

8. Radlagerung nach Anspruch 6, dadurch **gekennzeichnet,** daß die dem Radlagerbolzen (9) zugeordnete Nabe (12) an der radseitigen Stirnseite eine radiale Verzahnung (25) aufweist, in welche ein auf dem ersten Lagerschaft (18) geführtes Bauteil, z.B. ein Bremsträgerschild (15), zwecks Bildung einer Drehsperre eingreift.

9. Radlagerung nach Anspruch 6 oder einem der folgenden, dadurch **gekennzeichnet,** daß die Achsen (1,22) der Augen (7,8) bzw. Naben (12) des Schwinghebels (3) zueinander parallel liegen.

10. Radlagerung nach Anspruch 1 oder einem der folgenden, dadurch **gekennzeichnet,** daß die dem Schwinghebel (3) zugekehrte Stirnfläche (26) des Radlagerbolzens (9) sowie die dazu benachbarte Stirnfläche (27) der Nabe (12) oder/und des Auges (8) des Schwinghebels (3) eine die Winkeleinstellung des Radlagerbolzens (9) sichtbar machende Anordnung (28,29) aufweisen.

## Claims

1. Rocker lever wheel bearing in vehicle axles, in particular in torsion spring axles of vehicle trailers, in which the one eye (7) of the rocker lever (3) is seated on an axle stub (2) of the vehicle axle (1) and the other eye (8) bears a wheel bearing pin (9) which is guided by means of a first bearing shaft (18) in the eye (8) and is axially securely clamped by way of a collar (19) by means of screwing (10) and which bears the wheel bearing (21) by means of a second bearing shaft (20), characterized in that the axes (22, 23) of the two bearing shafts (18, 20) form an acute angle (alpha) to one another, whereof the angle point (24) lies in the region between the collar (19) and the second bearing shaft (20) for the wheel bearing.

2. Wheel bearing according to Claim 1, characterized in that the acute angle (alpha) has the size of the predetermined toe-in.

3. Wheel bearing according to Claim 1, characterized in that the angle point (24) of the acute angle (alpha) lies at the bearing surface of the collar (19) against the eye (8) of the rocker lever (3).

4. Wheel bearing according to Claim 1 or one of the subsequent claims, characterized in that the first bearing shaft (18) is guided in the eye (8) of the rocker lever rotatably about its axis (22), but is fixed (11) against rotation in the securely clamped state.

5. Wheel bearing, in particular according to Claim 1 or one of the subsequent claims, characterized in that the wheel rocker lever (3) comprises two deeply stamped half shells (4, 5) of sheet steel which are welded to one another along their edges (6) and enclose a hollow space.

6. Wheel bearing according to Claim 5, characterized in that punched cutouts are made in the half shells (4, 5) in the region of the eyes (7, 8) to be formed, and in that hubs (12) are inserted in the punched cutouts and are welded on the outside to the half shells (4, 5).

7. Wheel bearing according to Claim 6, characterized in that the wheel bearing pin (9) has in the region of its screwing (10) to the rocker lever (3) at least one longitudinal groove (17) for engaging a rotation-preventing means (11) of the screwing (10).

8. Wheel bearing according to Claim 6, characterized in that the hub (12) associated with the wheel bearing pin (9) has on the wheel-side end side a radial toothing (25) in which there engages a component, e.g. a brake support plate (15), guided on the first bearing shaft (18), for the purpose of forming a rotation blocking means.

9. Wheel bearing according to Claim 6 or one of the subsequent claims, characterized in that the axes (1, 22) of the eyes (7, 8) and hubs (12) of the rocker lever (3) lie parallel to one another.

10. Wheel bearing according to Claim 1 or one of the subsequent claims, characterized in that the end face (26) of the wheel bearing pin (9) facing the rocker lever (3) and the end face (27) adjacent thereto of the hub (12) and/or of the eye (8) of the rocker lever (3) have an arrangement (28, 29) which makes the angular position of the wheel bearing pin (9) visible.

## Revendications

1. Suspension de roue à levier oscillant pour des essieux de véhicules, notamment des essieux à ressorts de torsion de remorques de véhicules, dans laquelle un oeillet (7) du levier oscillant (3) repose sur une fusée d'essieu (2) de l'essieu (1) du véhicule et l'autre oeillet (8) porte un boulon (9) de roulement de roues, qui pénètre dans un oeillet (8) par un premier arbre de tourillonnement (18) et est bloqué fermement par serrage axialement par l'intermédiaire d'un collet (19) au moyen d'un système vissé (10) et porte, par un second arbre de tourillonnement (20), le roulement de roue (21), caractérisée par le fait que les axes (22,23) des deux arbres de tourillonnement (18,20) font entre eux un angle aigu (alpha), dont le sommet (24) est situé dans la zone présente entre le collet (19) et le second arbre de tourillonnement (20) pour le roulement de roues.

2. Suspension de roue suivant la revendication 1, caractérisée par le fait que l'angle aigu (alpha) possède la valeur du pincement prédéterminé des roues avant.

3. Suspension de roue suivant la revendication 1, caractérisée par le fait que le sommet (24) de l'angle aigu (alpha) est situé sur la surface d'application du collet (19) contre le levier (8) du levier oscillant (3).

4. Suspension de roue suivant la revendication 1 ou l'une des suivantes, caractérisée par le fait que le premier arbre de tourillonnement (18) pénètre dans l'oeillet (8) du levier oscillant de manière à pouvoir tourner autour de son axe (22), mais est bloqué contre toute rotation (11), dans l'état fixé par serrage.

5. Suspension de roue notamment suivant la revendication 1 ou l'une des suivantes, caractérisée par le fait que le levier oscillant de roue (3) est constitué par deux demi-coques embouties (4,5) en tôle d'acier, qui sont réunies par soudage le long de leurs bords (6) et enserrent une cavité.

6. Suspension de roue suivant la revendication 5, caractérisée par le fait que les demi-coques (4,5) sont découpées dans la zone des oeillets (7,8) devant être formés et que des moyeux (12) sont insérés dans les découpes et sont soudés extérieurement aux demi-coques (4,5).

7. Suspension de roue suivant la revendication 6, caractérisée par le fait que le boulon de roulement de roue (9) comporte, au voisinage de son élément vissable (10) équipé du levier oscillant (3), au moins une rainure longitudinale (17) permettant l'engagement d'un moyen de blocage en rotation (11) de l'élément vissable (10).

8. Suspension de roues suivant la revendication 6, caractérisée par le fait que le moyeu (12), qui est associé au boulon (9) du roulement de roue, possède, sur la face frontale située du côté de la roue, une denture radiale (25), dans laquelle un composant, qui est guidé sur le premier arbre de tourillormement(18), par exemple un bouclier de support de frein (15), s'engage pour former un système de blocage en rotation.

9. Suspension de roues de roues suivant la revendication 6 ou l'une des suivantes, caractérisée par le fait que les axes (1,22) des oeillets (7,8) ou du moyeu (12) du levier oscillant (30) sont parallèles entre eux.

10. Suspension de roues suivant la revendication 1 ou l'une des suivantes, caractérisée par le fait que la surface frontale (26), tournée vers le levier oscillant (3), du boulon (9) du roulement de roue ainsi que la surface frontale (27), qui en est voisine, du moyeu (12) et/ou de l'oeillet (8) du levier oscillant (3) possèdent un dispositif (28,29), qui rend visible le réglage angulaire du boulon (9) du roulement de roue.
